# EUROPEAN PATENT SPECIFICATION

(11) **EP 0 986 238 B1**
(45) Date of publication and mention of the grant of the patent: **08.08.2012**
(21) Application number: 99202987.6
(22) Date of filing: 13.09.1999
(51) Int. Cl.: H04M 3/44, H04Q 3/00

(54) **A telecommunication system and a method for establishing a communication link between associated users**
Verfahren und System fur die Aufbau einer Verbindung zwischen assoziierten Gebraucher
Système et méthode de télécommunication établissant un lien entre des utilisateurs associés

(30) Priority: 11.09.1998 NL 1010065
(43) Date of publication of application: 15.03.2000
(73) Proprietor: Telefonaktiebolaget LM Ericsson (publ), 164 83 Stockholm (SE)
(72) Inventor: De Lange, Wouter, 5120 AA Rijen (NL)
(74) Representative: Dohmen, Johannes Maria Gerardus

(56) References cited:
- EP-A- 0 464 610
- WO-A-97/23081
- DE-C- 19 632 354
- US-A- 5 583 925
- US-A- 5 673 311

## Description

The present invention relates to a telecommunication system comprising switching means, memory means, selection means and wired and/or wireless communication and transmission means for establishing a communication link between users of the system, each associated with an individual identification code, wherein groups of users are formed, wherein to each group a group association parameter can be assigned and wherein to users of a group an individual access code can be assigned, wherein the switching means, the memory means, and the selection means are arranged in that via the communication means a user of a group can establish uniquely and unambiguously a communication link with another user of the same group by selecting the said access code assigned to the other user, said memory means are arranged for storing a group association parameter of a group to which said user is momentarily associated with, and in that the selection means are arranged for determining from said identification code and said group association parameter of a user that likes to establish a communication link the group of users to which said user is momentarily associated with.

Such a telecommunications system is known from United States patent US 5,673,311.

A further telecommunication system of this type is known from the German patent DE 196 32 354. This known system provides the possibility of establishing a communication link using a special, shortened, access code between users of the telecommunications system which are beforehand associated into a so-called communications group, wherein a user of the group is accessible to all the other users of the respective group by the same (short) access code. Examples of communications groups are, among others, teleworkers, service providers, representatives, but also relatives which would like to be telephonic accessible by an easy to remember number.

EP 0 464 610 relates to a method for displaying on the display of a communication device, such as a telephone, subscriber characteristic data, stored in a system database. Information of a subscriber is displayed based on its unique access code.

US patent 5,583,925 relates to the provision of a conference call. That is, the possibility of connecting several subscribers in a common call.

Although in the telecommunication system according to the above German patent DE 196 32 354 a user of a group is accessible to all the other users of the respective group through the same (short) access code, this known telecommunication system has the disadvantage in that the groups are built dependent on their position or location. That is, if a user selects access code x from the location Y, a communication link will be established between the respective user and the user which is registered by the access code x at the location Y. However, if the user selects access code x from location Z, a communication link is established with the user which is registered by the access code x at the location Z, which is a user other than at the location Y.

In particular with a large number of locations, it will be clear that this location dependent group building may also quickly lead to errors, because a user has to realize himself each time whether he is at the location at which the other user is registered or at a different location, such that in the latter case a different access code has to be selected than in the first case.

Accordingly, the invention has for its object to provide a telecommunication system of the type indicated in the preamble, for establishing a communication link between users of a communication group through an unambiguous access code, wherein the user may form part of two or more communication groups.

According to the invention, this is solved in that the memory means are arranged for storing a group association parameter of a user, and in that the selection means are arranged for determining from the identification code and the group association parameter the group of users of which the respective user is momentarily associated with.

In the telecommunication system according to the invention, by suitably setting his group association parameter, a user may indicate with which group he or she is momentarily associated with. By selecting an access code, the user then will be always uniquely and unambiguously connected with another user of the respective group, registered under said access code. This irrelative of the location at which the users are present.

In other words, if a user of a respective group at location Y selects the access code x, he will be connected with the same user as if he or she selects the access code x from the location Z.

In an embodiment of the telecommunication system according to the invention the memory means and the communication means are arranged for setting the group association parameter in a number of ways, if desired, among which:
- by the user himself;
- by a network operator;
- by a manager of a respective group;
- time dependent;
- fixed, and
- at a predetermined default value.

If a user forms part of just a single group, it will be clear that the group association parameter can be set to a predetermined default value and/or fixed, corresponding to the respective group.

With a time dependent setting of the group association parameter, it can be provided that the user is registered with one communication group during office hours, for example an office group or a business group, whereas the user outside office hours can be automatically associated with another group, for example his family group. This time dependent selection, if desired, can be provided automatically through implementation in the memory means and/or the selection means of the telecommunication system.

The telecommunication system according to the invention further provides the possibility of having the group association selected by a network operator or a group manager. A particular flexible and user friendly option is to leave the choice of the group to which a user momentarily wishes to be associated, to the user self.

Because the users of a group are easily recognisable by their access code, in accordance with a further embodiment of the invention, the switching means and the communication means are arranged for displaying of a user of a group which establishes a communication link with another user of the same group, at said other user the access code or part of the access code or a further identification corresponding to the access code, such as the name of the one user.

This embodiment provides the advantage that users, forming part of a respective group, can be identified among themselves without the need for the users to provide their identification code (subscriber number, user number, etc.). Knowledge about the access code assigned to a user in the respective group of users suffices. This is, for example, an advantage if users would like to keep secret their own identification code, by which they are addressable within the telecommunication system as such, but would like to be recognisable to other users within the respective group.

In order to establish the group with which a user is momentarily associated, in a further embodiment of the invention, the switching means and the communication means are established for indicating to the user the group with which the user is momentarily associated. This, for example, by displaying a group number or group name at display means of the communication means of the user. It has to be appreciated that users may belong to just one group.

To have a user in the system according to the invention registered with different groups, following a further embodiment of the invention, the access codes are comprised of a first part and a second part, wherein the first part is assigned to a group of users and the second part is assigned to a user of such group, wherein the selection means are arranged such that a user which is momentarily or permanently associated with a first group, through the first part of an access code, can establish a communication link with a user of a second group of which both users form part of.

Accordingly, if a user would like to reach another user in a different group, besides the possibility of registering himself in a respective group, he or she may also establish a communication link by first selecting the respective first part of the other group followed by the second part of the access code identifying the respective other user. It will be clear that within a group with which a user is momentarily associated with, the user only has to select the second part of the access code and not the first part which is implicitly known from the fact that the user is already associated with said group.

The access codes are, preferably, as short as possible, for example three or four digits, but in any case shorter than the identification codes of the users. It will be clear that short access codes increase the ease of use.

Besides setting up a link, in a yet further embodiment of the invention, the selection means are arranged for controlling tariff means for charging communication links between users of a group with a special tariff. Use of the special tariff and the tariff itself can be selected in accordance with the preference of the users and the telecommunication network operator(s). In particular, one may think of special tariffs for users of a group which are connected to different telecommunication networks, for example, the fixed public switched telecommunication network and a public wireless telecommunication network, such as the known GSM radio networks.

In a preferred embodiment of the telecommunication system according to the invention, the memory means comprise a first part for storing the group or groups of which users form part of and the group association parameter, and a second part for storing identification codes assigned to access codes in a respective group of users.

The identification code of the user which likes to establish a communication link forms a first address for determining, via the selection means, from the first part of the memory means and the corresponding group association parameter the group with which the user is momentarily associated with. The selected access code than forms a second address for selecting, via the selection means, the said user of the group with which a communication link has to be established.

If the selected access code comprises a first and second part, it will be appreciated that from the first part the selection means first determine the group with which the respective user wishes to communicate, and select the communication link to be established from the second part of the selected access code of the respective user of that group.

In accordance with the invention, the identification codes, the access codes and/or the group association parameters can be stored in the memory means by a network operator and/or under control of a user. For inputting these data into the memory means a user may use the keyboard of his telephone or data equipment, for example.

By selectively forming pairs, the invention further provides the possibility that certain users in a group may establish a link with a user of the group, while others not.

Besides forming communication pairs, the telecommunication system according to the invention, in a yet further embodiment thereof, may also be arranged for forming communication trio's, communication quartets, etc.. By also assigning to each trio, quartet, etc. an own access code, or if desired an own group, with the respective access code a user may directly establish a connection with the other users of the trio or quartet etc.. Under the respective access code, two or three or more identification codes have to be stored in the memory means, dependent whether a communication trio, communication quartet, etc. has been formed.

The above-described features, properties and advantages of the invention are illustrated in more detail by the following description, with reference to the enclosed drawings.

Figure 1 shows a simplified block diagram of a telecommunication system providing wired and/or wireless telecommunication links, arranged in accordance with the present invention.

Figure 2 shows in diagrammatic form an example of the formation of communication pairs according to the prior art following international patent application WO 97/23081.

Figure 3 shows in diagrammatic form an example of the formation of a communication group in accordance with the invention.

The invention will now be disclosed with reference to a so-called Intelligent Network (IN) telecommunication system 1, comprising a wired telecommunication network 2, such as the public switched telecommunication network, in the English specialist language known as "Public Switching Telecommunication Network" (PSTN) or the "Integrated Services Digital Network" (ISDN), and a wireless telecommunication network 3, such as the "Global System for Mobile communication" (GSM). For reasons of simplicity, just a single wireless telecommunication network has been shown. In practice, several wireless communication networks may be provided by different network operators, among which a local wireless telecommunication system in accordance with the "Cordless Telecommunication Mobility" (CTM) standard.

Users or subscribers A and B, C connect via a local switching centre or "Local Exchange" (LE) 4, 5 to a long distance switching centre or "Trunck Exchange" (TE) 6, 7. TE 6 and TE 7 are connected by a long distance transmission link 8 for establishing high traffic volumes. LE 4 and TE 6 as well as LE 5 and TE 7 are connected by an access transmission link 9, respectively. User A and user B each are coupled by a local transmission link 10 to LE 4, 5, respectively. User C connects via a transmission link 12 to an office switch or "Private Automatic Branche eXchange" (PABX) 11. The PABX 11 is connected to LE 5 via a local transmission link 13. Generally, the transmission links 8, 9, 10, 12 and 13 are made of copper and/or optical fibre cables, dependent on the required transmission capacity. Although only three users A, B and C are shown, a person skilled in the art will appreciate that a larger number of users may be connected to an LE 4, 5 or a PABX 11, wherein the telecommunication network 2 may comprise a larger number of TE and LE then shown.

In accordance with the IN concept, TE 6 and 7 are of the type comprising so-called "Service Switching Point" (SSP) equipment 16, 17. The SSP 16, 17 control the corresponding TE 6, 7 for establishing the required transmission links between the users of the telecommunication network 2. The SSP 16, 17, among others, may also be arranged for charging connection and call costs in the telecommunication network 2.

Further, to each of the SSP 16, 17 so-called "Service Control Point" (SCP) equipment has been assigned, SCP 18 and SCP 19, respectively. The SCP control the communication services available to the users of the network. For the exchange of signalling and control information, the SSP 16, 17 and the SCP 18, 19 are coupled by means of signalling links 20, 21. An IN network of this type is generally known to those skilled in the art, and needs no further detailed explanation.

The wireless radio telecommunication network 3 comprises a plurality of mobile users D, only one of which has been shown in the form of a car. By means of a radio link 30 and transceiver means 31 user D is coupled to transceiver means 32 of a so-called radio base station 26. In the Figure, the radio base station 26 is illustratively shown in the form of a radio mast. A wireless radio communication network, such as a radio network operating in according with the GSM standard, comprises in general a plurality of radio base station 26, each of which providing service to a separate geographical region of limited dimensions, also called a cell.

By a transmission link 27 the radio base stations 26 connect to a radio switch or "Mobile Telephone Switching Office" (MTSO) 28. The MTSO 28 connects by a transmission link 29 to TE 6. In this manner, a telecommunication link can be established from the fixed telecommunication network 2 with a user of the wireless or mobile telecommunication network 3. The construction of the wireless telecommunication network 3 and the coupling with the wired or fixed telecommunication network are itself known to those skilled in the art, and needs no further detailed explanation.

Each subscriber or user A, B, C, D is addressable by an individual unique identification code or subscriber number.

For the purpose of the invention, the telecommunication system 1 comprises memory means 25 and the SCP 18, 19 and the MTSO 28 are equipped with selection means 22, 23 and 33, respectively. In the embodiment shown, the memory means 25 connect to the SCP 18 by a signalling link 24. However, it is also possible to provide memory means at other positions in the telecommunication network 1, in addition to or instead of the memory means 25, such as memory means 34 coupled with the MTSO 28, for example. For the purpose of the invention, the said memory means 25, 34 may take the form of separately provided memory means or memory means forming part of existing memory means internally in an SCP or MTSO, for example, or external memory means coupled thereto. Preferably, the memory means 25 are positioned centrally in the system, in order to ease the updating and maintenance thereof. The selection means 22, 23, 33 may be arranged in an SSP 16, 17 or an LE 4, 5, among others dependent on the practical realization of the telecommunication system 1.

For a proper understanding of the invention, first the prior art known from the International patent application WO 97/23081 will be discussed, in which communication pairs between users are formed and stored in the memory means of the telecommunication system.

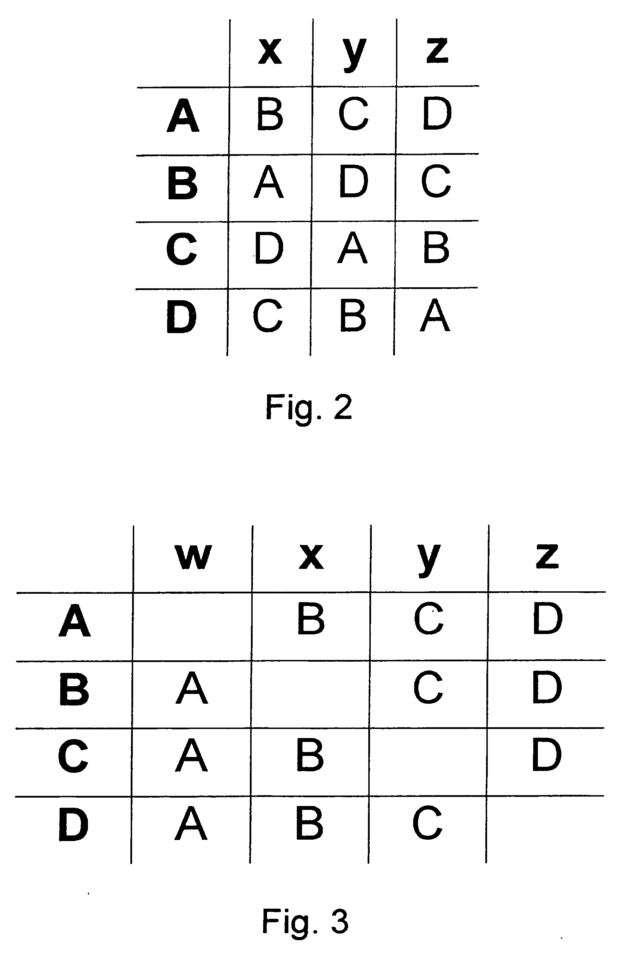

Assume that users A, B, C, and D would like to form mutual communication pairs. That is, user A desires to form a communication pair with user B, but also with user C and user D. Starting from a two dimensional memory structure, in which the identification code of a user A, B, C, D forms a first row address and the access code x, y, z forms a second column address, Figure 2 shows a possible memory storage of communication pairs according to the prior art.

User A, having a need to establish a link with user B, selects to this purpose access code x. By combining the identification number of user A (in Figure 2 also assumed to be A) and the access code x, which in practice, usually will be a three or four digit number, the identification number of user B (in this case also represented by B) can be retrieved from the memory means. Next, the telecommunication system can establish automatically, in a known manner, a telecommunication link between the users A and B. In the same manner may user C establish a communication link with user B by selecting access code z, etc..

From this example, immediately a disadvantage of the communication pair building according to WO 97/23081 appears, in that user A has to select access code x for establishing a communication link with user B, while user C selects access code z for establishing a communication link with user B. In other words, user A is not able to establish a link with user B by selecting access code x from the telephone terminal of user C. Neither can user A, if he or she has forgotten the access code for establishing a link with user D, for example, retrieve the access code from user C, because the latter establishes a link with D by means of access code x, while Figure 2 shows that user A has to select access code z.

Figure 3 shows, in the same manner as Figure 2, an example forming communication pairs according to the invention, in which to each user of a group of users an individual access code has been assigned. According to the example, there has been assigned access code w to user A, access code x to user B, access code y to user C and access code z to user D. Accordingly, each user A, B, C, D is uniquely recognisable for each other user in the same group by means of the respective access code. If user A desires to establish a communication link with user B, user A selects access code x. User C who desires to establish a link with user B, following the solution of the invention, selects also access code x just as user D, etc..

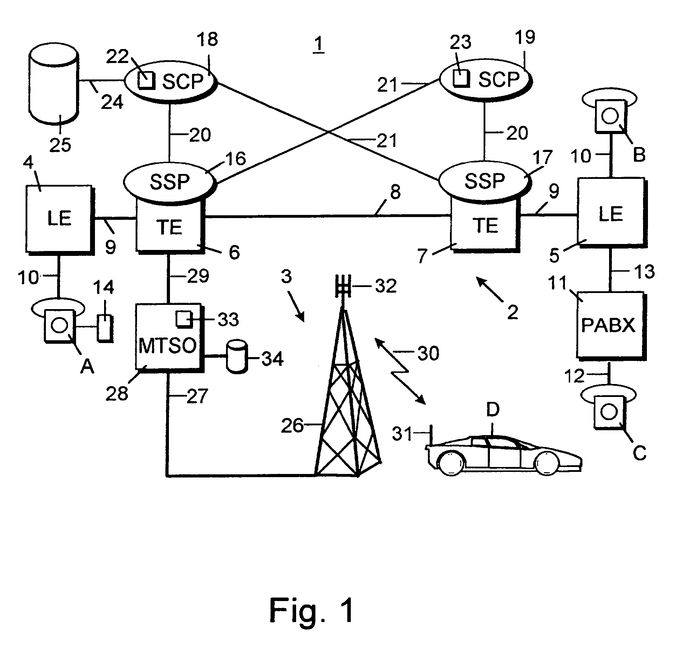

If user A, in the system according to the invention, desires to establish a link with user D from the telephone terminal of user B, for example, user A may for this purpose select the same access code z as if he or she would use his or hers private telephone terminal. In the case a user is equipped with equipment having a display, for example user A having a telephone terminal comprising a display 14 (see Figure 1), each other user in the group can be uniquely identified by displaying at the display means the respective access code which has been assigned to the other user or a name or any other identification derived from this access code. This has the advantage that user C in the system according to the invention does not have to be identified by his identification code C, but that it suffices to use access code y, for example. This goes also if a user in a group makes use of the possibility to have calls switched to another user in the same group, also known as "call forwarding". The identification code of a user in the group may be kept secret.

In accordance with the invention, different communication groups may be formed in this manner, in which a user, for example user A, forms part of different groups. Preferably, to keep the access code within a group as short as possible and for uniquely addressing a respective user in a plurality of groups, the access codes w, x, y, z may comprise of a first part and a second part, for example a code 333n, in which n=1, 2, 3, 4, .... Applied to the example of Figure 3, user A may own access code 3331, user B access code 332, user C access code 3333 and user D access code 3334, for example.

The first part of the access code can be selected for identifying a respective group, if a user A, for example, also forms communication pairs with users E, F, G, etc. in a different group. For illustration purposes, user A may be registered in a first "family group", that is a group having communication pairs between users who are relatives, friends or acquaintances, and a second "business group", for example formed by colleagues or business connections. The first part of the access code may itself be divided up in a prefix and suffix, for example, such as a prefix 33 and a suffix 4, 5, 6, etc.. The prefix 33 is a system code for recognizing that a respective user tries to establish a communication link with another user with which he or she forms a communication pair, whereas the suffix 4, 5, 6, etc. designates the respective group from which the communication pair has to be selected.

A network operator may form groups in advance. That is, to certain large groups of users an own unique suffix may be assigned which, dependent on the number of groups, may comprise more than one digit, for example three digits. By allocating suffixes for private use, a respective user may be registered in one or more business groups and even a number of family or private groups, for example.

If a user is just with one group, the respective group may be identified directly by the identification code of the said user. It will be appreciated that a group of users comprises at least two users.

In particular, with a large number of groups each having a considerable number of users, the access codes can become relatively long, such that the advantage of a short access code, which has to be easy to remember, to a large extend becomes lost.

In order to be able to use relatively short access codes, the invention provides, among others, a group association parameter, with which a user can be permanently or temporarily associated with a particular group. That is, by means of the group association parameter the user can be permanently assigned to a business or office communication group, for example, in which the user can address any other user of this communication group by means of the (shortened) access code. That is, the above-mentioned second part thereof, if necessary provided with a shortened first part which for signalling purposes only indicates that a user would like to establish a communication link with another user of the communication group with which the said user is momentarily associated with, that is with which he or she forms a communication pair. In this manner, it is possible to contact uniquely and unambiguously users within the same group by a relatively short access code, irrespective of the location of the user in the telecommunication system.

In accordance with the invention, the group association parameter can be set by the user self, for example from his own communication means, by a network operator, a group manager, time dependent, fixed, or by a default value if the user belongs to just one group, for example. By making the group association time dependent, during office hours a user may be associated to a business group of a company or office, whereas outside office hours the same user may be associated with a family group or the like, for example. It is also possible to have a user, outside office hours, associated with a group for answering emergency calls and the like, for example.

If the communication means of the user comprise display means, as disclosed above, the invention provides also in displaying on the display means the respective group with which the user is momentarily associated with.

If a user would like to establish a communication link with a user of another, different group, the user may first associate himself with the other group and thereafter establish the link, or the user may select a longer access code comprising the first part which forms an identification of the said other group.

It will be appreciated that the group association parameter according to the invention for the greater part facilitates the ease of use for users of the system, in that only shortened access codes have to be used in the group with which the user is momentarily associated with, without the need for each time identifying the group.

In a preferred embodiment of the invention, the memory means (25, 34) are comprised of a first part and a second part. The first part is used for determining, by the selection means (22, 23, 33) from the identification code of a user, whether he or she forms part of different groups and for determining the group association parameter of the group with which a user is momentarily associated with. The second part of the memory then comprises the different groups, wherein for each group the identification codes of the users of that group assigned to a particular access code, are registered.

For a person skilled in the art it will be clear that the ordering of the communication pairs as shown in Figure 3 is just illustratively, as are the number examples. It is important that to each user of a group of users an individual access code and group association parameter are assigned.

Further, it is not necessary to form communication pairs between all the users of a group of users. Referring back to Figure 3, if user C does not wish to communicate with user B, the memory position addressed by the identification code C and the access code x is simply left open. Programming of the communication pairs may be done by the network operator or the user himself, in which the access code of the other user of the communication pair to be formed and the identification code of the user self serve as address.

Again consider Figure 3. Assume that user A would like to form a communication pair with user C. By inputting the access code y, the identification means may select the respective memory position in the memory means from the identification code of the user A and the system may store at this position on its own motion the identification code of user C. In this manner, the identification code of user C can be kept completely secret or anonymous to user A.

Although in the above it is assumed to form communication pairs, with the system according to the invention it is also possible to form a communication trio, a communication quartet, etc.. An individual access number will be assigned to each communication trio or communication quartet, etc., and the different identification codes of a trio or quartet are registered in the memory means following the particular access number. Communication trio's and communication quartets, etc., may be registered as individual groups, if required. If a user of a respective trio, quartet, etc. selects the respective access code, a link is automatically established between all other users of the trio, quartet, etc..

The invention further provides charging with a special tariff of communication links between users of a group. The charging means in the telecommunication network 1 can be suitably controlled by the identification means 22, 23, 33 (Figure 1) by analysing the access code. If the charging means are positioned in the SSP 16, 17 and the MTSO 28, for example, the special charging can be applied by suitable signalling.

Although the invention is disclosed by means of an IN telecommunication system 1, comprising a wired telecommunication network 2 and a wireless, mobile radio communication network 3, it will be appreciated that the invention can also be applied in each of the telecommunication networks 2 or 3 separately.

## Claims

1. A telecommunication system (1) comprising switching means (4-7, 16-19; 28), memory means (25; 34), selection means (22, 23; 33) and wired and/or wireless communication and transmission means for establishing a communication link between users (A-D) of the system (1), each associated with an individual identification code, wherein groups of users (A-D) are formed, wherein to each group a group association parameter can be assigned and wherein to users (A-D) of a group an individual access code (w-z) can be assigned, wherein the switching means (4-7, 16-19; 28), the memory means (25; 34), and the selection means (22, 23; 33) are arranged in that via the communication means a user (A-D) of a group can establish uniquely and unambiguously a communication link with another user (A-D) of the same group by selecting the said access code (w-z) assigned to the other user, said memory means (25; 34) are arranged for storing a group association parameter of a group to which said user (A-D) is momentarily associated with, and in that the selection means (22, 23; 33) are arranged for determining from said identification code and said group association parameter of a user that likes to establish a communication link the group of users to which said user (A-D) is momentarily associated with, **characterised in that** said memory means (25; 34) are arranged for storing under user control group association parameters, identification codes and access codes forming said groups.

2. A telecommunication system (1) according to claim 1, wherein the memory means (25; 34) and the communication means are arranged for setting the group association parameter of the group to which said user is momentarily associated with In one or more of the following ways:
- by the user himself;
- by a network operator;
- by a manager of a respective group;
- time dependent;
- fixed, and
- at a predetermined default value.

3. A telecommunication system (1), according to claim 1 or 2, wherein the access codes (w-z) are comprised of a first part and a second part, wherein the first part is assigned to a group of users and the second part is assigned to a user (A-D) of such group, wherein the selection means (22, 23; 33) are arranged such that a user (A-D) which is momentarily or permanently associated with a first group, through the first part of an access code (w-z) can establish a communication link with a user (A-D) of a second group of which both users form part of.

4. A telecommunication system (1) according to any of the previous claims, wherein the memory means (25; 34) comprise a first part for storing the group or groups of which users (A-D) form part of and the group association parameters, and a second part for storing identification codes assigned to the access codes (w-z) of a respective group of users.

5. A telecommunication system (1) according to claim 4, wherein the memory means (25; 34) are centrally positioned in the telecommunication system (1).

6. A telecommunication system (1) according to any of the previous claims, wherein the switching means (4-7, 16-19; 28) and the transmission means (8-12; 27, 29-32) are arranged for displaying of a user (A-D) of a group which establishes a communication link with another user (A-D) of the same group, at said other user the access code (w-z) or part of the access code (w-z) or a further identification corresponding to the access code (w-z), such as the name of the one user.

7. A telecommunication system (1) according to any of the previous claims, wherein the switching means (4-7, 16-19; 28) and the transmission means (8-12; 27, 29-32) are arranged for establishing communication links between users (A-D) of a group connected to different telecommunication networks, such as the fixed public switched telecommunication network (2) and a public wireless telecommunication network (3).

8. A telecommunication system (1) according to any of the previous claims, wherein the selection means (22, 23; 33) are arranged for controlling charging means for charging communication links between the users (A-D) of a group by a special tariff.

9. A telecommunication system (1) according to any of the previous claims, wherein the memory means (25; 34) and the selection means (22, 23; 33) are arranged such that within a group of users communication pairs can be formed between two or more users (A-D).

10. A telecommunication system (1) according to any of the previous claims, wherein the switching means (4-7, 16-19; 28) and the communication means are arranged for displaying to a user (A-D) the group with which said user (A-D) is momentarily associated with.

11. A method for operating a telecommunication system (1) according to any of the previous claims, wherein users (A-D) of said system are assigned individual identification codes, wherein groups of users (A-D) are formed, wherein to each group a group association parameter is assigned and wherein to users (A-D) of a group an individual access code (w-z) is assigned, **characterized in that** group association parameters, identification codes and access codes forming said groups are stored in the memory means (25; 34) under user control.

12. A method according to claim 11, wherein access codes (w-z) and/or group association parameters are stored centrally in the memory means (25; 34) by a network operator.

13. A method according to any of the claims 11 or 12, further comprising a step of storing in said memory means in association with said identification codes of said users, group association parameters which indicate the group with which a respective user is momentarily associated with.

## Patentansprüche

1. Telekommunikationssystem (1), mit Schaltmitteln (4-7, 16-19; 28), Speichermitteln (25; 34), Auswahlmitteln (22, 23; 33) und festverdrahteten und/oder drahtlosen Kommunikations- und Übertragungsmitteln zur Herstellung einer Kommunikationsverbindung zwischen Nutzern (A-D) des Systems (1), die jeweils einem individuellen Identifikationscode zugeordnet sind, wobei Gruppen von Nutzern (A-D) gebildet sind, jeder Gruppe ein Gruppenassoziationsparameter zugewiesen sein kann und Nutzern (A-D) einer Gruppe ein individueller Zugangscode (w-z) zugewiesen sein kann, wobei die Schaltmittel (4-7, 16-19; 28), die Speichermittel (25; 34) und die Auswahlmittel (22, 23; 33) so angeordnet sind, dass ein Nutzer (A-D) einer Gruppe über die Kommunikationsmittel als Einziger und auf eindeutige Weise eine Kommunikationsverbindung mit einem anderen Nutzer (A-D) der gleichen Gruppe durch Auswählen des dem anderen Nutzer zugewiesenen Zugangscodes (w-z) herstellen kann, wobei die Speichermittel (25; 34) so angeordnet sind, dass sie einen Gruppenassoziationsparameter einer Gruppe speichern, zu der der Nutzer (A-D) momentan gehört, und wobei die Auswahlmittel (22, 23; 33) so angeordnet sind, dass sie aus dem Identifikationscode und dem Gruppenassoziationsparameter eines Nutzers, der eine Kommunikationsverbindung aufbauen möchte, die Nutzergruppe bestimmen, zu der der Nutzer (A-D) momentan gehört, **dadurch gekennzeichnet, dass** die Speichermittel (25; 34) so angeordnet sind, dass sie nutzergesteuert Gruppenassoziationsparameter, Identifikationscodes und Zugangscodes, die die Gruppen bilden, speichern.

2. Telekommunikationssystem (1) nach Anspruch 1, bei dem die Speichermittel (25; 34) und die Kommunikationsmittel so angeordnet sind, dass sie den Gruppenassoziationsparameter der Gruppe, zu der der Nutzer momentan gehört, auf mindestens eine der folgenden Weisen festlegen:
- durch den Nutzer selbst;
- durch einen Netzbetreiber;
- durch einen Leiter einer entsprechenden Gruppe;
- zeitabhängig;
- fest; und
- bei einem vorbestimmten Standardwert.

3. Telekommunikationssystem (1) nach Anspruch 1 oder 2, bei dem die Zugangscodes (w-z) aus einem ersten und einem zweiten Teil bestehen, wobei der erste Teil einer Nutzergruppe zugewiesen und der zweite Teil einem Nutzer (A-D) einer solchen Gruppe zugewiesen ist, wobei die Auswahlmittel (22, 23; 33) so angeordnet sind, dass ein Nutzer (A-D), der momentan oder permanent zu einer ersten Gruppe gehört, über den ersten Teil eines Zugangscodes (w-z) eine Kommunikationsverbindung mit einem Nutzer (A-D) einer zweiten Gruppe, von der die beiden Nutzer einen Teil bilden, herstellen kann.

4. Telekommunikationssystem (1) nach einem der vorhergehenden Ansprüche, bei dem die Speichermittel (25; 34) einen ersten Teil zum Speichern der Gruppe oder Gruppen, von denen Nutzer (A-D) einen Teil bilden, und der Gruppenassoziationsparameter und einen zweiten Teil zum Speichern von Identifikationscodes, die den Zugangscodes (w-z) einer entsprechenden Nutzergruppe zugewiesen sind, umfassen.

5. Telekommunikationssystem (1) nach Anspruch 4, bei dem die Speichermittel (25; 34) zentral im Telekommunikationssystem (1) angeordnet sind.

6. Telekommunikationssystem (1) nach einem der vorhergehenden Ansprüche, bei dem die Schaltmittel (4-7, 16-19; 28) und die Übertragungsmittel (8-12; 27, 29-32) so angeordnet sind, dass sie den Zugangscode (w-z) oder einen Teil des Zugangscodes (w-z) oder eine weitere, dem Zugangscode (w-z) entsprechende Identifikation, wie etwa den Namen des einen Nutzers, eines Nutzers (A-D) einer Gruppe, der eine Kommunikationsverbindung mit einem anderen Nutzer (A-D) der gleichen Gruppe herstellt, dem anderen Nutzer anzeigen.

7. Telekommunikationssystem (1) nach einem der vorhergehenden Ansprüche, bei dem die Schaltmittel (4-7, 16-19; 28) und die Übertragungsmittel (8-12; 27, 29-32) so angeordnet sind, dass sie Kommunikationsverbindungen zwischen Nutzern (A-D) einer Gruppe herstellen, die mit verschiedenen Telekommunikationsnetzen verbunden sind, wie etwa mit dem festen öffentlichen Fernsprechnetz (2) oder einem öffentlichen, drahtlosen Telekommunikationsnetz (3).

8. Telekommunikationssystem (1) nach einem der vorhergehenden Ansprüche, bei dem die Auswahlmittel (22, 23; 33) so angeordnet sind, dass sie Lademittel zum Laden von Kommunikationsverbindungen zwischen den Nutzern (A-D) einer Gruppe mit einem speziellen Tarif steuern.

9. Telekommunikationssystem (1) nach einem der vorhergehenden Ansprüche, bei dem die Speichermittel (25; 34) und die Auswahlmittel (22, 23; 33) so angeordnet sind, dass innerhalb einer Nutzergruppe Kommunikationspaare zwischen zwei oder mehr Nutzern (A-D) gebildet werden können.

10. Telekommunikationssystem (1) nach einem der vorhergehenden Ansprüche, bei dem die Schaltmittel (4-7, 16-19; 28) und die Kommunikationsmittel so angeordnet sind, dass sie einem Nutzer (A-D) die Gruppe anzeigen, zu der der Nutzer (A-D) momentan gehört.

11. Verfahren zum Betreiben eines Telekommunikationssystems (1) nach einem der vorhergehenden Ansprüche, bei dem Nutzer (A-D) des Systems individuellen Identifikationscodes zugewiesen sind, wobei Gruppen von Nutzern (A-D) gebildet werden, jeder Gruppe ein Gruppenassoziationsparameter zugewiesen wird und Nutzern (A-D) einer Gruppe ein individueller Zugangscode (w-z) zugewiesen wird, **dadurch gekennzeichnet, dass** Gruppenassoziationsparameter, Identifikationscodes und Zugangscodes, die die Gruppen bilden, nutzergesteuert in den Speichermitteln (25; 34) gespeichert werden.

12. Verfahren nach Anspruch 11, bei dem Zugangscodes (w-z) und/oder Gruppenassoziationsparameter von einem Netzbetreiber zentral in den Speichermitteln (25; 34) gespeichert werden.

13. Verfahren nach einem der Ansprüche 11 oder 12, das ferner einen Schritt umfasst, bei dem in den Speichermitteln zusammen mit den Identifikationscodes der Nutzer Gruppenassoziationsparameter gespeichert werden, die die Gruppe angeben, zu der ein entsprechender Nutzer momentan gehört.

## Revendications

1. Système de télécommunications (1) comprenant un moyen de commutation (4-7, 16-19 ; 28), un moyen de mémoire (25 ; 34), un moyen de sélection (22, 23 ; 33) et un moyen de communication et de transmission câblé et/ou sans fil pour établir une liaison de communication entre des utilisateurs (A-D) du système (1), chacun d'eux étant associé à un code d'identification individuelle, dans lequel des groupes d'utilisateurs (A-D) sont formés, dans lequel un paramètre d'association de groupe peut être assigné à chaque groupe et dans lequel un code d'accès individuel (w-z) peut être assigné aux utilisateurs (A-D) d'un groupe, dans lequel le moyen de commutation (4-7, 16-19 ; 28), le moyen de mémoire (25 ; 34) et le moyen de sélection (22, 23 ; 33) sont agencés de sorte que, par l'intermédiaire du moyen de communication, un utilisateur (A-D) d'un groupe puisse établir de manière unique et sans ambiguïté une liaison de communication avec un autre utilisateur (A-D) du même groupe en sélectionnant ledit code d'accès (w-z) assigné à l'autre utilisateur, ledit moyen de mémoire (25 ; 34) est agencé pour stocker un paramètre d'association de groupe d'un groupe auquel ledit utilisateur (A-D) est provisoirement associé, et de sorte que le moyen de sélection (22, 23 ; 33) soit agencé pour déterminer, à partir dudit code d'identification et dudit paramètre d'association de groupe d'un utilisateur qui souhaite établir une liaison de communication, le groupe d'utilisateurs auquel ledit utilisateur (A-D) est provisoirement associé, **caractérisé en ce que** ledit moyen de mémoire (25 ; 34) est agencé pour stocker, sous le contrôle de l'utilisateur, des paramètres d'association de groupe, des codes d'identification et des codes d'accès formant lesdits groupes.

2. Système de télécommunications (1) selon la revendication 1, dans lequel le moyen de mémoire (25 ; 34) et le moyen de communication sont agencés pour régler le paramètre d'association de groupe du groupe auquel ledit utilisateur est provisoirement associé selon une ou plusieurs des manières suivantes :
- par l'utilisateur proprement dit,
- par un opérateur de réseau ;
- par un gestionnaire d'un groupe respectif ;
- en fonction du temps ;
- d'une manière fixe ; et
- à une valeur par défaut prédéterminée.

3. Système de télécommunications (1) selon la revendication 1 ou 2, dans lequel les codes d'accès (w-z) se composent d'une première partie et d'une seconde partie, dans lequel la première partie est assignée à un groupe d'utilisateurs et la seconde partie est assignée à un utilisateur (A-D) de ce groupe, dans lequel le moyen de sélection (22, 23 ; 33) est agencé de sorte qu'un utilisateur (A-D) qui est provisoirement ou en permanence associé à un premier groupe, à travers la première partie d'un code d'accès (w-z), puisse établir une liaison de communication avec un utilisateur (A-D) d'un deuxième groupe dont les deux utilisateurs font partie.

4. Système de télécommunications (1) selon l'une quelconque des revendications précédentes, dans lequel le moyen de mémoire (25 ; 34) se compose d'une première partie pour stocker le ou les groupes dont les utilisateurs (A-D) font partie et les paramètres d'association de groupe, et d'une seconde partie pour stocker les codes d'identification assignés aux codes d'accès (w-z) d'un groupe respectif d'utilisateurs.

5. Système de télécommunications (1) selon la revendication 4, dans lequel le moyen de mémoire (25 ; 34) est positionné centralement dans le système de télécommunications (1).

6. Système de télécommunications (1) selon l'une quelconque des revendications précédentes, dans lequel le moyen de commutation (4-7, 16-19 ; 28) et le moyen de transmission (8-12 ; 27, 29-32) sont agencés pour afficher d'un utilisateur (A-D) d'un groupe qui établit une liaison de communication avec un autre utilisateur (A-D) du même groupe, au dit autre utilisateur le code d'accès (w-z) ou une partie du code d'accès (w-z) ou une autre identification correspondant au code d'accès (w-z), comme le nom de l'utilisateur.

7. Système de télécommunications (1) selon l'une quelconque des revendications précédentes, dans lequel le moyen de commutation (4-7, 16-19 ; 28) et le moyen de transmission (8-12 ; 27, 29-32) sont agencés pour établir des liaisons de communication entre des utilisateurs (A-D) d'un groupe connecté à différents réseaux de télécommunications, comme le réseau de télécommunication commuté public fixe (2) et un réseau de télécommunications sans fil public (3).

8. Système de télécommunications (1) selon l'une quelconque des revendications précédentes, dans lequel le moyen de sélection (22, 23 ; 33) est agencé pour commander à un moyen de facturation de facturer des liaisons de communication entre les utilisateurs (A-D) d'un groupe à un tarif spécial.

9. Système de télécommunications (1) selon l'une quelconque des revendications précédentes, dans lequel le moyen de mémoire (25 ; 34) et le moyen de sélection (22, 23 ; 33) sont agencés de sorte que des paires de communication puissent être formées entre deux utilisateurs (A-D) ou plus d'un groupe d'utilisateurs.

10. Système de télécommunications (1) selon l'une quelconque des revendications précédentes, dans lequel le moyen de commutation (4-7, 16-19 ; 28) et le moyen de communication sont agencés pour afficher à un utilisateur (A-D) le groupe auquel ledit utilisateur (A-D) est provisoirement associé.

11. Procédé de fonctionnement d'un système de télécommunications (1) selon l'une quelconque des revendications précédentes, dans lequel des codes d'identification individuelle sont assignés à des utilisateurs (A-D) dudit système, dans lequel des groupes d'utilisateurs (A-D) sont formés, dans lequel un paramètre d'association de groupe est assigné à chaque groupe et dans lequel un code d'accès individuel (w-z) est assigné à des utilisateurs (A-D) d'un groupe, **caractérisé en ce que** les paramètres d'association de groupe, les codes d'identification et les codes d'accès formant lesdits groupes sont stockés dans le moyen de mémoire (25 ; 34) sous le contrôle de l'utilisateur.

12. Procédé selon la revendication 11, dans lequel les codes d'accès (w-z) et/ou les paramètres d'association de groupe sont stockés centralement dans le moyen de mémoire (25 ; 34) par un opérateur de réseau.

13. Procédé selon l'une quelconque des revendications 11 et 12, comprenant en outre une étape de stockage dans ledit moyen de mémoire, en association avec lesdits codes d'identification desdits utilisateurs, des paramètres d'association de groupe indiquant le groupe auquel un utilisateur respectif est provisoirement associé.
